# EUROPÄISCHE PATENTSCHRIFT

(11) **EP 2 623 442 B1**
(45) Veröffentlichungstag und Bekanntmachung des Hinweises auf die Patenterteilung: **11.02.2015**
(21) Anmeldenummer: 12197113.9
(22) Anmeldetag: 14.12.2012
(51) Int. Cl.: B65G 47/96

(54) **Einrichtung zum Fördern von Produkten**
Apparatus for conveying products
Dispositif pour transporter des produits

(30) Priorität: 31.01.2012 DE 102012001770
(43) Veröffentlichungstag der Anmeldung: 07.08.2013
(73) Patentinhaber: Weber Maschinenbau GmbH Breidenbach, 35236 Breidenbach (DE)
(72) Erfinder: Lischinski, Gerd, 35236 Breidenbach (DE)
(74) Vertreter: Manitz, Finsterwald & Partner GbR

(56) Entgegenhaltungen:
- US-A- 5 857 555
- US-A- 6 152 280
- US-B1- 6 736 254

## Beschreibung

Die vorliegende Erfindung betrifft eine Einrichtung zum Fördern von Produkten, insbesondere von von einer Aufschneidemaschine für Lebensmittelprodukte stammenden Produktscheiben oder Produktportionen.

Förderanlagen zum Transportieren von Produkten mittels Förderbändern oder dergleichen sind an sich bekannt. Derartige Förderanlagen können zum Beispiel einen Eingangsförderer und mehrere dem Eingangsförderer nachgeordnete, übereinanderliegende Ausgangsförderer aufweisen. Es ist bekannt, einen als Verteiler dienenden Förderer an dem - in Förderrichtung betrachtet - vorderen Ende des Eingangsförderers nach Art einer Wippe vorzusehen, so dass der Förderer verschwenkbar ist, um Produkte, die über den Eingangsförderer einlaufen, in Abhängigkeit von der Schwenkstellung des Förderers einem der nachgeordneten Ausgangsförderer zuzuführen. Da der Förderer ein bewegliches, weil verschwenkbares, Bauteil in der Förderanlage bildet, sind hohe Sicherheitsanforderungen an den Förderer bzw. an die Förderanlage zu stellen.

Der vorliegenden Erfindung liegt die Aufgabe zugrunde, eine im Hinblick auf die Sicherheitsanforderungen verbesserte Einrichtung zum Fördern von Produkten zu schaffen.

Die Aufgabe wird durch eine Einrichtung mit den Merkmalen des Anspruchs 1 gelöst.

Eine Fördereinrichtung der eingangs genannten Art umfasst erfindungsgemäß zumindest einen Förderer, der einen Träger und wenigstens einen am Träger gehaltenen Förderabschnitt umfasst, wobei zumindest ein Teil des Förderabschnitts relativ zum Träger zwischen einer Förderstellung und einer Sicherheitsstellung um eine in Förderrichtung verlaufende Achse verkippbar ist.

Aufgrund der Verkippbarkeit des Förderabschnitts um die in Förderrichtung verlaufende Achse erfüllt die erfindungsgemäße Fördereinrichtung höhere Sicherheitsanforderungen als aus dem Stand der Technik bekannte Förderanlagen. Insbesondere ist es aufgrund der Verkippbarkeit möglich, dass der Förderabschnitt bzw. ein verkippbarer Teil des Förderabschnitts einem Köperteil einer Bedienperson, wie etwa einer Hand oder einem Arm, ausweichen kann, wenn der Körperteil versehentlich einer durch den bestimmungsgemäßen Betrieb der Einrichtung notwendigen Bewegung des Förderabschnitts, beispielsweise dem eingangs erwähnten Verschwenken, "im Wege ist", d.h. wenn der Körperteil durch eine Unachtsamkeit der Bedienperson in den Bewegungsbereich des Förderabschnitts gelangt. Eine Verletzung der Bedienperson wird somit durch die Erfindung vermieden.

Besonders vorteilhaft ist die Erfindung in Verbindung mit Fördervorrichtungen, die mehrere unabhängig voneinander bewegbare und in räumlicher Nähe zueinander angeordnete Förderer aufweisen, beispielsweise mehrere nebeneinander liegende, jeweils nach Art einer Wippe verschwenkbare Förderer zum Verteilen von einlaufenden Produkten. In derartigen Situationen ergeben sich nämlich im laufenden Betrieb zwischen den einzelnen Förderern Zwischenräume oder Durchlässe, die eine Bedienperson zu einem Eingreifen bzw. Hindurchgreifen verleiten können, und zwar vor allem dann, wenn - wie in der Praxis häufig der Fall - die einzelnen Bewegungen der Förderer nicht kontinuierlich, sondern nur zeitweise erfolgen. Es sind dann nämlich nur vermeintlich dauerhaft, tatsächlich aber nur vorübergehend auftretende Zwischenräume bzw. Durchlässe vorhanden, die sich bei der nächsten Bewegung eines der Förderer wieder schließen können. Besonders problematisch ist, dass diese diskontinuierlichen Bewegungsabläufe häufig nicht vorhersehbar sind, da sie von zahlreichen Bedingungen abhängig sind, die sich ständig ändern können. Die erfindungsgemäß vorgesehene Verkippbarkeit des Förderabschnitts in eine Sicherheitsstellung kann gerade in derartigen Umgebungen Verletzungen sicher vermeiden, da der Förderabschnitt aufgrund seiner Verkippbarkeit ausweichen kann, wenn er auf einen Widerstand in Form eines versehentlich in seinen Bewegungsbereich gelangten Körperteils stößt.

Mögliche Weiterbildungen und Ausführungsformen der Erfindung sind auch in den abhängigen Ansprüchen, der Beschreibung sowie den Zeichnungen angegeben.

Bevorzugt ist eine in der Förderstellung wirksame Rückhalteeinrichtung vorgesehen, die ein Verkippen des Förderabschnitts in die Sicherheitsstellung erst bei Überschreiten einer auf den Förderabschnitt wirkenden Grenzbelastung freigibt. Dadurch wird erreicht, dass der Förderabschnitt während des normalen Förderbetriebs in der Förderstellung gehalten wird und nur in Ausnahmefällen, wenn die Grenzbelastung überschritten wird, in die Sicherheitsstellung verkippt. Dabei ist die Grenzbelastung vorteilhaft so gewählt, dass sie überschritten wird, wenn der Förderabschnitt an einen Körperteil einer Bedienperson stößt.

Besonders bevorzugt ist die Rückhalteeinrichtung zwischen dem Förderabschnitt und dem Träger wirksam. Auf diese Weise kann die Rückhalteeinrichtung kompakt gehalten und kostengünstig ausgebildet werden. Die Rückhalteeinrichtung kann beispielsweise wenigstens ein vorgespanntes, insbesondere kugelförmiges, Verriegelungselement aufweisen, welches am Förderabschnitt angeordnet und in der Förderstellung in eine Aufnahme eingreift, die komplementär zu dem Verriegelungselement am Träger vorgesehen ist. Dadurch wird der Förderabschnitt am Träger gehalten. Bei Überschreiten der Grenzbelastung gelangt das Verriegelungselement entgegen seiner Vorspannung außer Eingriff mit der Aufnahme, so dass der Förderabschnitt freigeben wird und in die Sicherheitsstellung verkippen kann.

Der Träger kann in Förderrichtung betrachtet vor dem Förderabschnitt angeordnet sein, so dass der Träger und der Förderabschnitt in Förderrichtung betrachtet hintereinander liegen.

Bevorzugt ist der Förderabschnitt, insbesondere mittig, auf einem die Achse definierenden, insbesondere stabförmigen, sich in Förderrichtung erstreckenden Achselement gelagert und/oder mittels des Achselements am Träger getragen. Durch Verwendung des Achselements zur Kopplung des Förderabschnitts mit dem Träger kann auf einfache Weise die Verkippbarkeit des Förderabschnitts relativ zum Träger erreicht werden.

Vorzugsweise umfasst der Förderabschnitt wenigsten einen plattenförmig ausgebildeten Teilabschnitt, der insbesondere eine tischartige Auflagefläche bzw. einen Unterbau für ein darüber laufendes Förderband oder für mehrere darüber laufende, parallele Förderriemen des Förderers bilden kann.

Nach einer bevorzugten Weiterbildung der Erfindung ist der Förderabschnitt oder ein Teilabschnitt des Förderabschnitts zwischen der Förderstellung und einer weiteren, zweiten Sicherheitsstellung um eine quer zur Förderrichtung verlaufende, zweite Achse verkippbar. Dadurch wird eine weitere Ausweichmöglichkeit für den Förderabschnitt geschaffen.

Besonders bevorzugt weist der Förderabschnitt wenigstens zwei in Förderrichtung hintereinander liegende Teilabschnitte auf, wobei der in Förderrichtung betrachtet vordere Teilabschnitt zwischen der Förderstellung und der weiteren, zweiten Sicherheitsstellung um die zweite Achse verkippbar ist. Der vordere, insbesondere weiter vom Träger entfernt liegende Teilabschnitt kann somit nicht nur um die in Förderrichtung verlaufende Achse verkippen, sondern auch um die quer dazu verlaufende zweite Achse. Dadurch kann der vordere Teilabschnitt beispielsweise ausweichen, wenn eine Bedienperson in einen Bereich zwischen dem vorderen Teilabschnitt und einem nachgeordneten Förderer greift. Es kann somit vermieden werden, dass die Hand oder der Arm einer Bedienperson zwischen dem vorderen Teilabschnitt und dem nachgeordneten Förderer eingeklemmt wird.

Es ist zweckmäßig, aber nicht zwingend, dass der vordere Teilabschnitt um beide Achsen verkippbar ist. So kann allgemein vorgesehen sein, dass der Förderabschnitt mehrere Teilabschnitte aufweist, von denen nicht alle um die in Förderrichtung verlaufende Achse verkippbar sind, sondern wenigstens ein Teilabschnitt lediglich um die quer zur Förderrichtung laufende Achse verkippbar ist.

In der Förderstellung kann eine weitere, zweite Rückhalteeinrichtung zwischen den beiden Teilabschnitten wirksam sein, die ein Verkippen des vorderen Teilabschnitts in die zweite Sicherheitsstellung erst bei Überschreiten einer auf den vorderen Teilabschnitt wirkenden Grenzbelastung freigibt.

Generell kann auch unabhängig von den vorstehend erläuterten Ausgestaltungen bei einem mehrteiligen Förderabschnitt vorgesehen sein, dass die einzelnen Teile unabhängig voneinander und relativ zueinander bzw. relativ zu einem Träger bzw. einer Basis, zwischen einer Förderstellung und einer Sicherheitsstellung verstellbar bzw. verkippbar sind.

Gemäß einem Ausführungsbeispiel ist vorgesehen, dass der Förderabschnitt ein umlaufendes Förderband oder umlaufende Förderriemen umfasst, das bzw. die bei einem Verkippen eines Teils eines mehrteiligen Förderabschnitts selbst nicht oder zumindest nicht als Ganzes verkippt wird bzw. werden, aber derart angeordnet und/oder ausgebildet ist bzw. sind, dass das Verkippen des Teils des Förderabschnitts möglich ist. Dabei kann insbesondere in Förderrichtung betrachtet hinter dem Förderabschnitt wenigstens eine Umlenkeinrichtung für das Förderband oder für die Förderriemen vorgesehen sein, wobei bevorzugt die Umlenkeinrichtung am Förderabschnitt festgelegt ist. Insbesondere verläuft die Achse, um welche das Teil verkippbar ist, zwischen Obertrum und Untertrum des Förderbandes bzw. zwischen Obertrumen und Untertrumen der Förderriemen.

Hierdurch wird auf in konstruktiver Hinsicht einfache Weise erreicht, dass bei einem mehrteiligen Förderabschnitt nicht alle Teile gemeinsam verkippen müssen.

Auch dann, wenn der Förderabschnitt als Ganzes verkippt wird bzw. wenn alle Teile eines mehrteiligen Förderabschnitts gemeinsam verkippt werden, ist ein Förderband bzw. sind Förderriemen bei entsprechender Anordnung und/oder Ausbildung vorteilhaft, da es auf diese Weise möglich ist, nur eine Umlenkung am Förderabschnitts selbst und die andere Umlenkung an einer Basis vorzusehen, an welcher der Förderabschnitt angebracht ist und relativ zu welcher das Verkippen des Förderabschnitts erfolgt.

Vorzugsweise ist in Förderrichtung betrachtet hinter dem Förderabschnitt wenigstens eine Umlenkeinrichtung für das Förderband bzw. für die Förderriemen vorgesehen.

Bevorzugt ist die Umlenkeinrichtung am Förderabschnitt, insbesondere an einem in Förderrichtung betrachtet vorderen Teil des Förderabschnitts, befestigt. Die Umlenkeinrichtung wird daher mitbewegt, wenn der Förderabschnitt bzw. der vordere Teil des Förderabschnitts verkippt wird, so dass auch ein über die Umlenkeinrichtung laufendes Förderband bzw. über die Umlenkeinrichtung laufende Förderriemen verkippt wird bzw. werden.

Nach einer bevorzugten Weiterbildung der Erfindung ist der Förderer dazu ausgebildet, an einer Basis angebracht und relativ zur Basis um eine quer zur Förderrichtung verlaufende Schwenkachse verschwenkt zu werden. Der Förderer lässt sich somit beispielsweise nach Art einer zum Verteilen von einlaufenden Produkten auf nachfolgende, übereinander angeordnete Ausgangsförderer dienenden Wippe an der Basis anbringen.

Vorzugsweise kann der Förderer in Abhängigkeit von der Schwenkstellung mit einem von mehreren übereinander angeordneten Ausgangs- oder Eingangsförderern zur Übergabe oder Übernahme von Produkten zusammenwirken.

Der Förderer kann beispielsweise an dem in Förderrichtung betrachtet vorderen Ende eines Eingangsförderers angeordnet sein, um über den Eingangsförderer einlaufende Produkte in Abhängigkeit von der Schwenkstellung des Förderers einem der nachgeordneten Ausgangsförderer zuzuführen. Umgekehrt kann der Förderer auch an dem in Förderrichtung betrachtet hinteren Ende eines Ausgangsförderers angeordnet sein, um Produkte, die von einem von mehreren übereinander angeordneten Eingangsförderern einlaufen, dem Ausgangsförderer zuzuführen. Der Förderer kann somit als eine Art Weiche eingesetzt werden.

Vorzugsweise ist der Träger zur verschwenkbaren Anbringung des Förderers an der Basis ausgebildet.

An der Basis kann eine weitere, insbesondere angetriebene, Umlenkeinrichtung vorgesehen sein, um zwischen der vorstehend erwähnten ersten Umlenkeinrichtung des Förderabschnitts und der zweiten Umlenkeinrichtung ein Förderband oder mehrere parallele Förderriemen einspannen zu können.

Die Erfindung betrifft auch eine Fördervorrichtung mit einer Basis und zumindest einer erfindungsgemäßen Fördereinrichtung, wobei der Förderer der Fördereinrichtung an der Basis angebracht und relativ zur Basis um eine quer zur Förderrichtung verlaufende Achse verschwenkbar ist.

Bei einer bevorzugten Ausgestaltung der Fördervorrichtung sind mehrere Förderer vorgesehen, die nebeneinander an der Basis angeordnet und unabhängig voneinander verschwenkbar sind. Beispielsweise können zumindest zwei nebeneinander liegende Eingangsförderer vorgesehen sein, denen jeweils ein Förderer nachgeordnet ist, der nach Art einer Wippe verschwenkbar ist. Da jeder Förderer in eine Sicherheitsstellung verkippbar ist, können die Förderer ausweichen, falls eine Bedienperson zwischen die Förderer greift und die Förderer relativ zueinander verschwenkt werden.

Die Erfindung wird nachfolgend beispielhaft anhand der beigefügten Zeichnungen erläutert. Es zeigen, jeweils in schematischer Darstellung,
- Fig. 1: eine perspektivische Darstellung eines erfindungsgemäßen Förderers, dessen Förderabschnitt sich relativ zu einem Träger des Förderers in einer Förderstellung befindet,
- Fig. 2: eine weitere perspektivische Darstellung des Förderers von Fig. 1, bei dem sich der Förderabschnitt relativ zum Träger in einer Sicherheitsstellung befindet,
- Fig. 3: eine weitere perspektivische Darstellung des Förderers von Fig. 1, wobei ein in Förderrichtung betrachtet vorderer Teilabschnitt des Förderabschnitts relativ zu einem hinteren Teilabschnitt eine Sicherheitsstellung einnimmt,
- Fig. 4: eine perspektivische Darstellung der Unterseite des Förderers von Fig. 1, bei dem sich der Förderabschnitt relativ zum Träger in einer Sicherheitsstellung befindet,
- Fig. 5: eine weitere perspektivische Darstellung der Unterseite des Förderers von Fig. 1, wobei der in Förderrichtung betrachtet vordere Teilabschnitt des Förderabschnitts relativ zu dem hinteren Teilabschnitt eine Sicherheitsstellung einnimmt und der hintere Teilabschnitt eine Sicherheitsstellung relativ zum Träger einnimmt,
- Fig. 6: eine Draufsicht auf eine erfindungsgemäße Fördervorrichtung, und
- Fig. 7: eine seitliche Ansicht der Fördervorrichtung von Fig. 6.

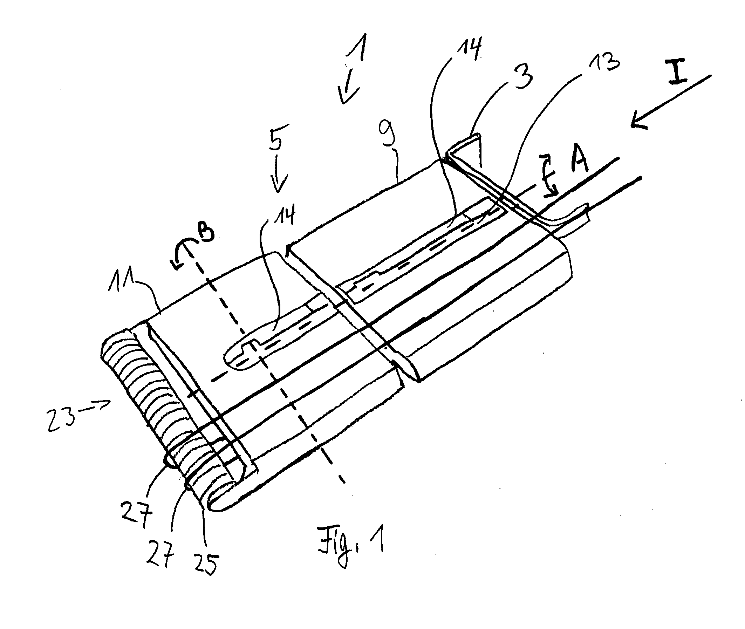

Der in den Fig. 1 bis 5 dargestellte Förderer 1 einer erfindungsgemäßen Einrichtung zum Fördern von Produkten, beispielsweise Scheiben oder Portionen, die von einem Hochleistungsslicer zum Aufschneiden von Lebensmittelprodukten stammen, umfasst einen Träger 3 und einen am Träger 3 gehaltenen Förderabschnitt 5.

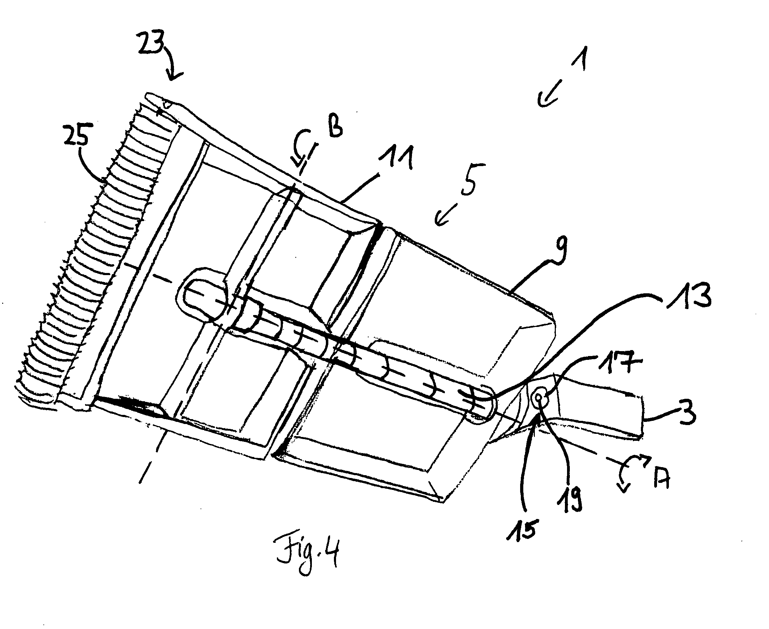

Bei dem Förderer 1 sind der Träger 3 und der Förderabschnitt 5 längs der Förderrichtung I hintereinander angeordnet, d.h. der Träger 3 liegt in Förderrichtung I betrachtet vor dem Förderabschnitt 5. Der Förderabschnitt 5 des Förderers 1 weist zwei Teilabschnitte 9 und 11 auf, die plattenförmig ausgebildet sind und eine in etwa rechteckige Oberseite besitzen. Die beiden Teilabschnitte 9 und 11 sind auf einem stabförmigen Achselement 13 (vgl. Fig. 4) beweglich gelagert, das in Förderrichtung I mittig unterhalb der beiden Teilabschnitte 9, 11 verläuft. Mittels des Achselements 13 werden die beiden Teilabschnitte 9, 11 am Träger 3 gehalten. Jeder Teilabschnitt 9, 11 weist außerdem eine längliche, mittige Aussparung 14 auf (vgl. Fig. 1).

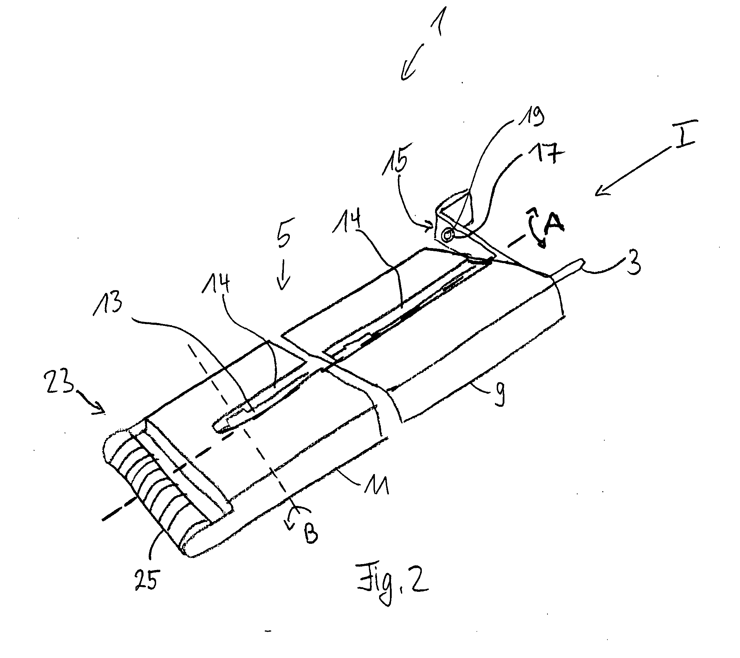

Der Förderabschnitt 5 bzw. die beiden Teilabschnitte 9, 11 können relativ zum Träger 3 eine Förderstellung einnehmen, wie in Fig. 1 gezeigt ist. Außerdem können die Teilabschnitte 9, 11 eine Drehbewegung um das Achselement 13 ausführen und dadurch in eine Sicherheitsstellung gelangen, wie in Fig. 2 gezeigt ist. Bei dem Förderer 1 ist somit der Förderabschnitt 5 relativ zum Träger 3 zwischen der Förderstellung und der Sicherheitsstellung um eine in Förderrichtung I verlaufende, vom Achselement 13 definierte Achse A verkippbar. Die beiden Teilabschnitt 9, 11 können gemeinsam um die Achse A kippen, aber auch unabhängig voneinander um die Achse A verkippt werden.

Dabei ist in der Förderstellung zwischen dem hinteren Teilabschnitt 9 und dem Träger 3 eine Rückhalteinrichtung 15 wirksam (vgl. Fig. 2 und 4), die ein Verkippen in die Sicherheitsstellung erst bei Überschreiten einer Grenzbelastung freigibt. Die Rückhalteeinrichtung 15 umfasst zwei Hervorhebungen 17, die jeweils seitlich versetzt zur Achse A am Träger 3 angeordnet sind und in ihrer Mitte jeweils eine Einsenkung 19 aufweisen. An der Seite des Teilabschnitts 9, die dem Träger 3 gegenüberliegt, sind zwei gegen die Förderrichtung I vorgespannte, kugelförmige Verriegelungselemente (nicht gezeigt) angeordnet. Dabei greifen die Verriegelungselemente in der Förderstellung jeweils in eine der Einsenkungen 19 ein, wodurch der Teilabschnitt 9 in der Förderstellung (vgl. Fig. 1) gehalten wird. Die auf die Verriegelungselemente wirkende Vorspannung ist so gewählt, dass die Verriegelungselemente aus den Einsenkungen 19 gedrückt werden, wenn der Teilabschnitt 9 über die Grenzbelastung hinaus belastet wird. Der Förderabschnitt 5 kann dann als Ganzes relativ zum Träger 3 um die Achse A kippen und in die Sicherheitsstellung gelangen (vgl. Fig. 2).

Zwischen dem hinteren Teilabschnitt 9 und dem vorderen Teilabschnitt 11 ist eine weitere, zweite Rückhalteeinrichtung 21 vorgesehen, die in der gleichen Weise wie die erste Rückhalteeinrichtung 15 ausgebildet ist. Durch die zweite Rückhalteeinrichtung 21 wird der vordere Teilabschnitt 11 in der Förderstellung gehalten.

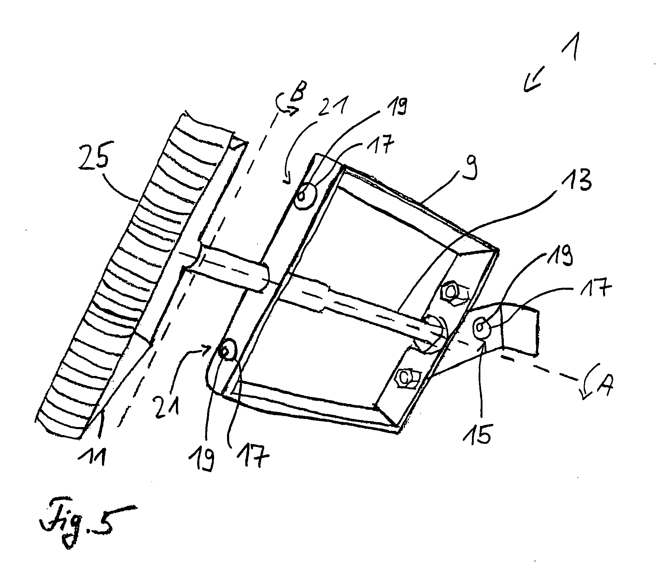

Der vordere Teilabschnitt 11 ist ferner um eine quer zur Förderrichtung I verlaufende zweite Achse B relativ zum hinteren Teilabschnitt 9 verkippbar, so dass das vordere Ende 23 des vorderen Teilabschnitts 11 relativ zum hinteren Teilabschnitt 9 nach unten verschwenken kann, wenn eine auf den hinteren Teilabschnitt 11 wirkende Grenzbelastung überschritten wird (vgl. Fig. 5).

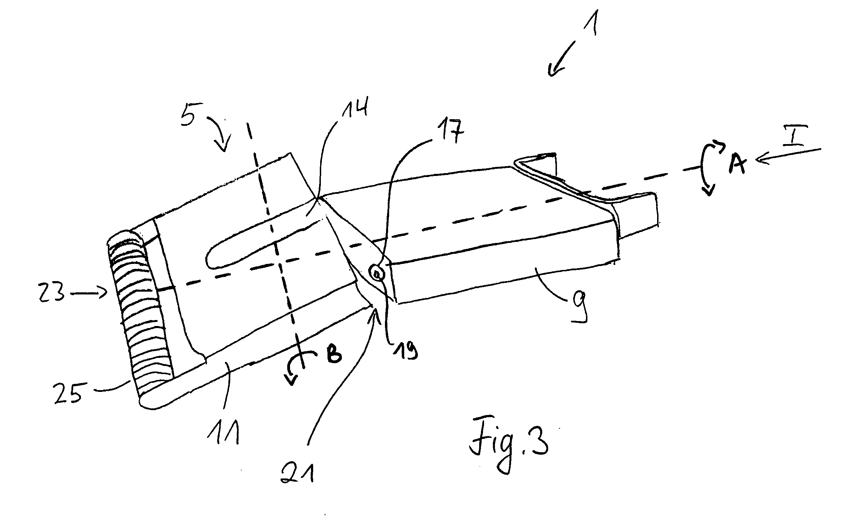

Wie Fig. 3 zeigt, kann der vordere Teilabschnitt 11 relativ zum hinteren Teilabschnitt 9 auch um beide Achsen A, B gleichzeitig gekippt werden, wenn beispielsweise ein vorderer Eckbereich des vorderen Teilabschnitts 11 belastet und die Grenzlast überschritten wird.

Am vorderen Ende 23 des vorderen Teilabschnitts 11 ist eine Umlenkeinrichtung 25 angebracht, mittels der über die gesamte Breite des Förderers 1 versetzt zueinander angeordnete, in Förderrichtung I verlaufende Förderriemen 27 umgelenkt werden.

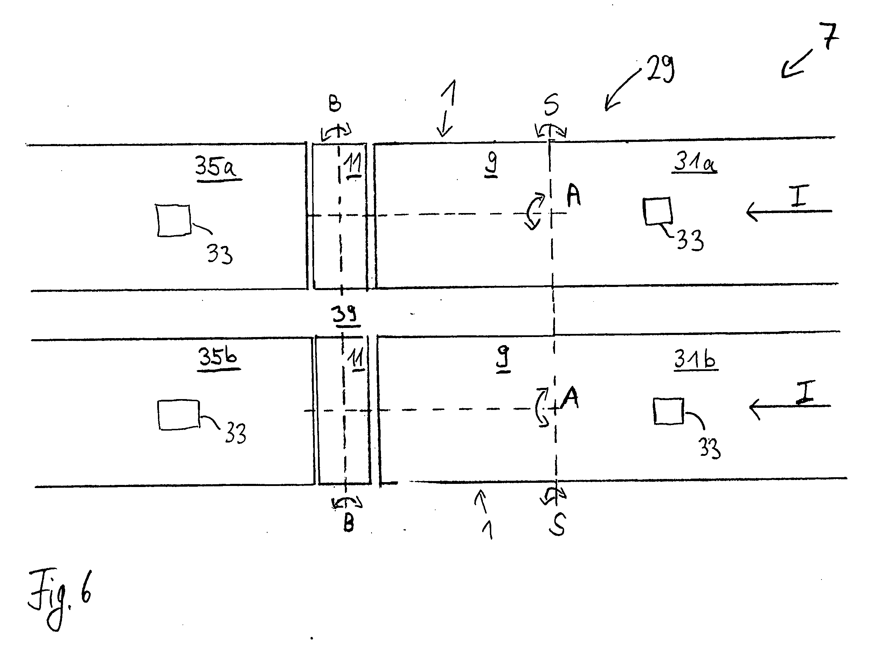

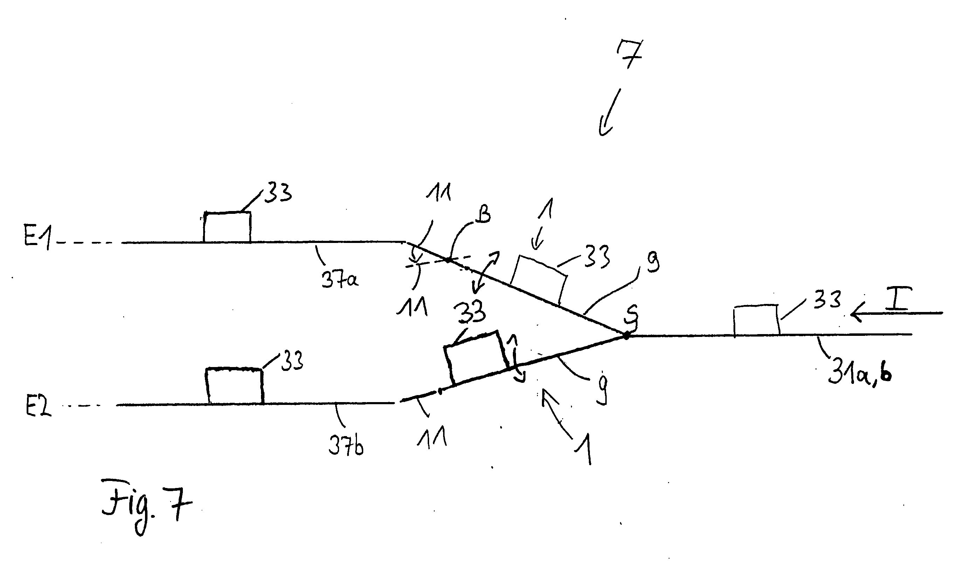

Die vorstehend beschriebene Fördereinrichtung kommt in der Fördervorrichtung 7 der Fig. 6 und 7 zum Einsatz, in welcher zwei nebeneinander angeordnete Förderer 1 verwendet werden.

Dabei weist die Fördervorrichtung 7 eine Basis 29 auf, die von zwei parallelen Eingangsförderern 31a, 31b gebildet ist, welche beispielsweise einer Aufschneidemaschine (nicht gezeigt) zum Aufschneiden von Lebensmitteln nachgeordnet sind und von der Aufschneidemaschine stammende Produkte 33 in Förderrichtung I herantransportieren. Jedem Eingangsförderer 31 a, 31b ist einer der Förderer 1 nachgeordnet, um die von dem jeweiligen Eingangsförderer 31a, 31b einlaufenden Produkte 33 weiter zu transportieren. Dabei ist jeder Förderer 1 nach Art einer Wippe an dem jeweiligen Eingangsförderer 31a, 31b angeordnet, so dass jeder Förderer 1 um eine quer zur Förderrichtung I verlaufende Schwenkachse S verschwenkt werden kann.

Den beiden Förderern 1 nachgeordnet ist jeweils ein Ausgangsfördererpaar 35a, 35b. Jedes Ausgangsfördererpaar 35a, 35b weist zwei übereinander angeordnete Ausgangsförderer auf, und zwar einen oberen Ausgangsförderer 37a in einer Ebene E1 und einen unteren Ausgangsförderer 37b in einer darunter liegenden Ebene E2 (Fig. 7).

Fig. 7 zeigt beispielhaft eine Situation, in welcher ein Förderer 1 nach oben zu seinem oberen Ausgangsförderer 37a und der daneben angeordnete andere Förderer 1 nach unten zu seinem unteren Ausgangsförderer 37b geschwenkt ist. Über den jeweiligen Ausgangsförderer 37a, 37b können die Produkte 33 sodann einer dem jeweiligen Ausgangsförderer 37a, 37b nachgeordneten Einrichtung (nicht gezeigt), wie etwa einer weiteren Fördereinrichtung, einer Robotereinheit oder einer Verpackungsmaschine, zugeführt werden.

Wie vorstehend erwähnt ist, nehmen die Teilabschnitte 9, 11 des jeweiligen Förderers 1 eine Förderstellung ein, in der sie durch die Rückhalteeinrichtungen 15, 21 gehalten werden. Die Teilabschnitte 9, 11 der nebeneinander angeordneten Förderer 1 können bei Überschreitung einer auf die Teilabschnitte 9, 11 wirkenden Grenzbelastung um die jeweilige in Förderrichtung I verlaufende Achse A verkippen. Dadurch kann vermieden werden, dass eine Bedienperson verletzt wird, die zwischen die beiden unabhängig voneinander verschwenkbaren Förderer 1 greift.

Da der vordere Teilabschnitt 11 jedes Förderers 1 außerdem um die quer zur Förderrichtung I verlaufende Achse B verkippbar ist, kann der vordere Teilabschnitt 11 unabhängig von dem hinteren Teilabschnitt 9 auch dann ausweichen, wenn die Bedienperson in den Bereich zwischen den jeweils gerade angesteuerten Ausgangsförderer 37a bzw. 37b und den hinteren Teilabschnitt 11 greift, wie es in Fig. 7 am Beispiel des nach oben geschwenkten Förderers 1 dargestellt ist, dessen in eine Sicherheitsstellung um die Achse B verkippter vorderer Teilabschnitt 11 gestrichelt angedeutet ist.

### Bezugszeichenliste

- 1: Förderer
- 3: Träger
- 5: Förderabschnitt
- 7: Fördervorrichtung
- 9: Teilabschnitt
- 11: Teilabschnitt
- 13: Achselement
- 14: Aussparung
- 15: Rückhalteeinrichtung
- 17: Hervorhebung
- 19: Einsenkung
- 21: Rückhalteeinrichtung
- 23: vorderes Ende
- 25: Umlenkeinrichtung
- 27: Förderriemen
- 29: Basis
- 31a: Eingangsförderer
- 31b: Eingangsförderer
- 33: Produkt
- 35a: Ausgangsförderer
- 35b: Ausgangsförderer
- 37a: oberer Ausgangsförderer
- 37b: unterer Ausgangsförderer

- A: Achse
- B: Achse
- I: Förderrichtung
- S: Schwenkachse

- E1: Ebene
- E2: Ebene

## Patentansprüche

1. Einrichtung zum Fördern von Produkten (33), insbesondere von von einer Aufschneidemaschine für Lebensmittelprodukte stammenden Produktscheiben oder Produktportionen,
mit zumindest einem Förderer (1)
**dadurch gekennzeichnet, dass** der Förderer (1) einen Träger (3) und wenigstens einen am Träger (3) gehaltenen Förderabschnitt (5) umfasst, und
dass zumindest ein Teil des Förderabschnitts (5) relativ zum Träger (3) zwischen einer Förderstellung und einer Sicherheitsstellung um eine in Förderrichtung (I) verlaufende Achse (A) verkippbar ist.

2. Einrichtung nach Anspruch 1,
**dadurch gekennzeichnet, dass**
eine in der Förderstellung wirksame Rückhalteeinrichtung (15) vorgesehen ist, die ein Verkippen des Förderabschnitts (5) in die Sicherheitsstellung erst bei Überschreiten einer auf den Förderabschnitt (5) wirkenden Grenzbelastung freigibt.

3. Einrichtung nach Anspruch 2,
**dadurch gekennzeichnet, dass**
die Rückhalteeinrichtung (15) zwischen dem Förderabschnitt (5) und dem Träger (3) wirksam ist.

4. Einrichtung nach einem der vorhergehenden Ansprüche,
**dadurch gekennzeichnet, dass**
der, insbesondere als vorzugsweise U-förmiger Bügel ausgebildete, Träger (3) in Förderrichtung (I) betrachtet vor dem Förderabschnitt (5) angeordnet ist.

5. Einrichtung nach einem der vorhergehenden Ansprüche,
**dadurch gekennzeichnet, dass**
der Förderabschnitt (5), insbesondere mittig, auf einem die Achse (A) definierenden Achselement (13) gelagert und/oder mittels des Achselements (13) am Träger (3) getragen ist.

6. Einrichtung nach einem der vorhergehenden Ansprüche,
**dadurch gekennzeichnet, dass**
der Förderabschnitt (5) wenigsten einen plattenförmig ausgebildeten Teilabschnitt (9, 11) aufweist.

7. Einrichtung nach einem der vorhergehenden Ansprüche,
**dadurch gekennzeichnet, dass**
der Förderabschnitt (5) oder ein Teilabschnitt (11) des Förderabschnitts (5) zwischen der Förderstellung und einer weiteren, zweiten Sicherheitsstellung um eine quer zur Förderrichtung (I) verlaufende zweite Achse (B) verkippbar ist.

8. Einrichtung nach Anspruch 7,
**dadurch gekennzeichnet, dass**
der Förderabschnitt (5) wenigstens zwei in Förderrichtung (I) hintereinander liegende Teilabschnitte (9, 11) aufweist, wobei der in Förderrichtung (I) betrachtet vordere Teilabschnitt (11) zwischen der Förderstellung und der weiteren, zweiten Sicherheitsstellung um die zweite Achse (B) verkippbar ist.

9. Einrichtung nach Anspruch 8,
**dadurch gekennzeichnet, dass**
in der Förderstellung eine weitere, zweite Rückhalteeinrichtung (21) zwischen den beiden Teilabschnitten (9, 11) wirksam ist, wobei die zweite Rückhalteeinrichtung (21) ein Verkippen des vorderen Teilabschnitts (11) in die zweite Sicherheitsstellung erst bei Überschreiten einer auf den hinteren Teilabschnitt (11) wirkenden Grenzbelastung freigibt.

10. Einrichtung nach einem der vorhergehenden Ansprüche,
**dadurch gekennzeichnet, dass**
der Förderabschnitt (5) ein umlaufendes Förderband oder umlaufende Förderriemen (27) umfasst, das bzw. die bei einem Verkippen eines Teils (9, 11) eines mehrteiligen Förderabschnitts (5) selbst nicht oder zumindest nicht als Ganzes verkippt wird bzw. werden.

11. Einrichtung nach einem der vorhergehenden Ansprüche,
**dadurch gekennzeichnet, dass**
der Förderer (1) dazu ausgebildet ist, an einer Basis (29) angebracht und relativ zur Basis (29) um eine quer zur Förderrichtung (I) verlaufende Schwenkachse (S) verschwenkt zu werden, insbesondere um in Abhängigkeit von der Schwenkstellung mit einem von mehreren übereinander angeordneten Ausgangs- oder Eingangsförderern (31a, 31b, 37a, 37b) zur Übergabe oder Übernahme von Produkten (33) zusammenzuwirken.

12. Einrichtung nach Anspruch 11,
**dadurch gekennzeichnet, dass**
der Träger (3) zur verschwenkbaren Anbringung des Förderers (1) an der Basis (29) ausgebildet ist.

13. Einrichtung nach Anspruch 11 oder 12,
**dadurch gekennzeichnet, dass**
zwischen der Basis (29) und einer Umlenkeinrichtung (25) ein umlaufendes Förderband oder umlaufende Förderriemen (27) eingespannt sind, wobei insbesondere eine Spannvorrichtung vorgesehen ist, mittels welcher die Zugspannung im Förderband bzw. in den Förderriemen (27) veränderbar ist.

14. Fördervorrichtung mit einer Basis (29) und zumindest einer Fördereinrichtung nach einem der vorhergehenden Ansprüche,
wobei der Förderer (1) an der Basis (29) angebracht und zumindest teilweise relativ zur Basis (29) um eine quer zur Förderrichtung (I) verlaufende Achse (S) verschwenkbar ist.

15. Fördervorrichtung nach Anspruch 14,
**dadurch gekennzeichnet, dass**
die Fördereinrichtung mehrere Förderer (1) umfasst, die nebeneinander an der Basis (29) angeordnet und unabhängig voneinander verschwenkbar sind.

## Claims

1. An installation for conveying products (33), in particular product slices or product portions coming from a slicing machine for food products,
having at least one conveyor (1),
**characterized in that** the conveyor (1) comprises a carrier (3) and at least one conveyor section (5) held at the carrier (3); and
**in that** at least a part of the conveyor section (5) is tiltable relative to the carrier (3) between a conveying position and a safety position about an axis (A) extending in the conveying direction (I).

2. An installation in accordance with claim 1,
**characterized in that**
a retention installation (15) active in the conveying position is provided which only releases a tilting of the conveyor section (5) into the safety position on an exceeding of a critical load acting on the conveying section (5).

3. An installation in accordance with claim 2,
**characterized in that**
the retention installation (15) is active between the conveying section (5) and the carrier (3).

4. An installation in accordance with any one of the preceding claims,
**characterized in that**
the carrier (3), in particular formed as a preferably U-shaped hoop, is arranged in front of the conveyor section (5) viewed in the conveying direction (I).

5. An installation in accordance with any one of the preceding claims,
**characterized in that**
the conveyor section (5) is supported, in particular centrally, on an axial element (13) defining the axis (A) and/or is carried at the carrier (3) by means of the axial element (13).

6. An installation in accordance with any one of the preceding claims,
**characterized in that**
the conveyor section (5) has at least one part section (9, 11) configured in plate form.

7. An installation in accordance with any one of the preceding claims,
**characterized in that**
the conveyor section (5) or a part section (11) of the conveyor section (5) is tiltable between the conveying position and a further, second safety position about a second axis (B) extending transversely to the conveying direction (I).

8. An installation in accordance with claim 7,
**characterized in that**
the conveying section (5) has at least two part sections (9, 11) lying behind one another in the conveying direction (I), with the front part section (11) viewed in the conveying direction (I) being tiltable between the conveying position and the further, second safety position about the second axis (B).

9. An installation in accordance with claim 8,
**characterized in that**
a further, second retention installation (21) is active between the two part sections (9, 11) in the conveying position, with the second retention installation (21) only releasing a tilting of the front part section (11) into the second safety position on an exceeding of a critical load acting on the rear part section (11).

10. An installation in accordance with any one of the preceding claims,
**characterized in that**
the conveyor section (5) includes a revolving conveyor belt or revolving conveyor bands (27) which is or are not tilted or is or are at least not tilted as a whole on a tilting of a part (9, 11) of a multipart conveyor section (5).

11. An installation in accordance with any one of the preceding claims,
**characterized in that**
the conveyor (1) is configured to be attached to a base (29) and to be pivoted relative to the base (29) about a pivot axis (S) extending transversely to the conveying direction (I), in particular to cooperate with one of a plurality of outgoing or ingoing conveyors (31a, 31b, 37a, 37b) arranged above one another to transfer or take over products (33) in dependence on the pivot position.

12. An installation in accordance with claim 11,
**characterized in that**
the carrier (3) is configured for the pivotable attachment of the conveyor (1) to the base (29).

13. An installation in accordance with claim 11 or claim 12,
**characterized in that**
a revolving conveyor belt or revolving conveyor bands (27) are clamped between the base (29) and a deflection installation (25), with in particular a clamping apparatus being provided by means of which the tensile stress in the conveyor belt or in the conveyor bands (27) can be varied.

14. A conveying apparatus having a base (29) and at least one conveying installation in accordance with any one of the preceding claims,
wherein the conveyor (1) is attached to the base (29) and is pivotable at least partly relative to the base (29) about an axis (S) extending transversely to the conveying direction (I).

15. A conveying apparatus in accordance with claim 14,
**characterized in that**
the conveying installation includes a plurality of conveyors (11) which are arranged next to one another at the base (29) and are pivotable independently of one another.

## Revendications

1. Appareil pour convoyer des produits (33), en particulier des tranches ou des portions de produits provenant d'une machine de découpe pour produits alimentaires, comprenant au moins un convoyeur (1),
**caractérisé en ce que**
le convoyeur (1) comprend un support (3) et au moins un tronçon de convoyage (5) tenu sur le support (3), et
**en ce qu'**au moins une partie du tronçon de convoyage (5) est susceptible de basculer par rapport au support (3) entre une position de convoyage et une position de sécurité autour d'un axe (A) s'étendant en direction de convoyage (I).

2. Appareil selon la revendication 1,
**caractérisé en ce qu'**il est prévu un moyen de retenue (15) actif dans la position de convoyage, qui libère un basculement du tronçon de convoyage (5) vers la position de sécurité uniquement en cas de dépassement d'une charge limite agissant sur le tronçon de convoyage (5).

3. Appareil selon la revendication 2,
**caractérisé en ce que** le moyen de retenue (15) est actif entre le tronçon de convoyage (5) et le support (3).

4. Appareil selon l'une des revendications précédentes,
**caractérisé en ce que** le support (3), réalisé en particulier sous forme d'un arceau de préférence en forme de U, est agencé avant le tronçon de convoyage (5) considéré en direction de convoyage (I).

5. Appareil selon l'une des revendications précédentes,
**caractérisé en ce que** le tronçon de convoyage (5) est monté, en particulier au milieu, sur un élément d'axe (13) qui définit l'axe (A) et/ou est porté sur le support (3) au moyen de l'élément d'axe (13).

6. Appareil selon l'une des revendications précédentes,
**caractérisé en ce que** le tronçon de convoyage (5) comprend au moins un tronçon partiel (9, 11) réalisé en forme de plaque.

7. Appareil selon l'une des revendications précédentes,
**caractérisé en ce que** le tronçon de convoyage (5) ou un tronçon partiel (11) du tronçon de convoyage (5) est susceptible de basculer entre la position de convoyage et une autre seconde position de sécurité autour d'un second axe (B) s'étendant perpendiculairement à la direction de convoyage (I).

8. Appareil selon la revendication 7,
**caractérisé en ce que** le tronçon de convoyage (5) comprend au moins deux tronçons partiels (9, 11) situés l'un derrière l'autre en direction de convoyage (I), tels que le tronçon partiel antérieur (11) considéré en direction de convoyage (I) est susceptible de basculer entre la position de convoyage et l'autre seconde position de sécurité autour du second axe (B).

9. Appareil selon la revendication 8,
**caractérisé en ce qu'**un autre second moyen de retenue (21) est actif entre les deux tronçons partiels (9, 11) dans la position de convoyage, et le second moyen de retenue (21) libère un basculement du tronçon partiel antérieur (11) vers la seconde position de sécurité uniquement en cas de dépassement d'une charge limite agissant sur le tronçon partiel postérieur (11).

10. Appareil selon l'une des revendications précédentes,
**caractérisé en ce que** le tronçon de convoyage (5) comprend une bande de convoyage en recirculation ou des courroies de convoyage en recirculation (27) qui n'est pas/qui ne sont pas basculée(s) elle(s)-même(s), ou tout au moins pas en totalité, en cas de basculement d'une partie (9, 11) d'un tronçon de convoyage (5) en plusieurs parties.

11. Appareil selon l'une des revendications précédentes,
**caractérisé en ce que** le convoyeur (1) est réalisée pour être monté sur une base (29) et pour être pivoté par rapport à la base (29) autour d'un axe de pivotement (S) s'étendant perpendiculairement à la direction de convoyage (I), en particulier afin de coopérer en fonction de la position de pivotement, avec un ou plusieurs convoyeurs de sortie ou d'entrée (31a, 31b, 37a, 37b) agencés les uns au-dessus des autres, pour la remise ou pour la reprise de produits (33).

12. Appareil selon la revendication 11,
**caractérisé en ce que** le support (3) est réalisé en vue d'un montage du convoyeur (1) avec possibilité de pivotement sur la base (29).

13. Appareil selon la revendication 11 ou 12,
**caractérisé en ce qu'**une bande de convoyage en recirculation ou des courroies de convoyage en recirculation (27) est/sont tendue(s) entre la base (29) et un dispositif de renvoi (25), et il est prévu en particulier un dispositif de tensionnement au moyen duquel la contrainte de traction dans la bande de convoyage ou dans les courroies de convoyage (27) peut être modifiée.

14. Dispositif de convoyage comprenant une base (29) et un appareil de convoyage selon l'une des revendications précédentes,
dans lequel le convoyeur (1) est monté sur la base (29) et est susceptible de pivoter au moins partiellement par rapport à la base (29) autour d'un axe (S) s'étendant perpendiculairement à la direction de convoyage (I).

15. Dispositif de convoyage selon la revendication 14,
**caractérisé en ce que** l'appareil de convoyage comprend plusieurs convoyeurs (1) qui sont agencés les uns à côté des autres sur la base (29) et qui sont susceptibles de pivoter indépendamment les uns des autres.
